# DEMANDE DE BREVET EUROPEEN

(11) **EP 0 633 068 A1**
(43) Date de publication de la demande: **11.01.1995**
(21) Numéro de dépôt: 94401488.5
(22) Date de dépôt: 30.06.1994
(51) Int. Cl.: B03C 1/00, B03C 1/025, C02F 1/48

(54) **Procédé et dispositif d'épuration cryomagnétique de fluides pollués**

(30) Priorité: 30.06.1993 FR 9308000
(71) Demandeur: BUREAU DE RECHERCHES GEOLOGIQUES ET MINIERES, ETABLISSEMENT PUBLIC A CARACTERE INDUSTRIEL ET COMMERCIAL, 75015 Paris Cédex 15 (FR); INSTITUT NATIONAL POLYTECHNIQUE DE LORRAINE, F-54500 VANDOEUVRE (FR)
(72) Inventeur: Clin, François, F-45100 Orleans (FR); Gillet, Gérard, F-54000 Nancy (FR); Bureau, Valérie, F-54000 Nancy (FR); Proust, François, F-45160 Olivet (FR); Vedrine, Henri, F-45100 Orleans (FR)
(74) Mandataire: Bruder, Michel

(57) **Abrégé**

La présente invention concerne un procédé et un dispositif destinés à l'extraction d'éléments sous forme de "flocs" paramagnétiques, précipités ou coprécipités, contenus dans des effluents liquides qui traversent au moins une chambre de traitement (9) soumise à l'action d'un champ magnétique de forte intensité, sous l'action de moyens d'aimantation (5,7), notamment à bobine supraconductrice, de façon à piéger les flocs dans la chambre de traitement (9).

Dans ce procédé et ce dispositif les effluents à traiter traversent une matrice d'extraction (8,8a,8b,8c) disposée dans la chambre de traitement (9,9a,9b,9c) et l'on effectue un rinçage, au cours duquel on interrompt l'admission des effluents dans la chambre de traitement (9) et où l'on admet dans celle-ci une solution de rinçage, de composition appropriée à la dissolution des flocs, et l'on extrait de ladite chambre de traitement (9) le "liquide de pollution", à savoir celui constitué par les flocs dissous et le liquide de rinçage.

## Description

La présente invention concerne un procédé et un dispositif destinés à l'extraction de métaux paramagnétiques précipités ou coprécipités sous forme de "flocs" dans des effluents liquides.

Une technique utilisée, lorsque l'on souhaite extraire des métaux contenus dans des effluents liquides, avant de les rejeter dans l'environnement, consiste tout d'abord à les faire précipiter, si leurs hydroxydes sont magnétiques, sous forme de flocs magnétiques, c'est-à-dire d'hydroxydes de métaux magnétiques, ou de les coprécipiter dans des hydroxydes de métaux magnétiques, puis à réaliser l'extraction de ces flocs, ou coprécipités, en les attirant au moyen d'un champ magnétique de très forte intensité.

Pour créer de tels champs magnétiques, on a l'habitude de recourir à des circuits magnétiques de forte puissance, de préférence à bobine supraconductrice. Dans de tels électroaimants le bobinage du cuivre résistif habituel est remplacé par un bobinage supraconducteur qui est immergé dans une enceinte isolée alimentée en hélium liquide, de façon à refroidir et maintenir les bobinages de l'électroaimant à une température voisine de 4°K. Afin d'éviter les déperditions calorifiques, l'enceinte est entourée de plusieurs couches isolantes et d'une paroi thermique, refroidie elle-même par de l'azote liquide, afin de diminuer la consommation en hélium.

Une fois que la bobine supraconductrice alimentée en courant électrique atteint la température mentionnée précédemment de 4K°, il est possible d'interrompre l'alimentation électrique et de mettre les bornes de la bobine en court-circuit, si bien que, par effet supraconducteur, le courant électrique se maintient dans la bobine, et celle-ci continue à produire le champ magnétique de forte intensité. Dans ces conditions la seule consommation d'énergie, une fois le processus ainsi établi, reste celle liée à la consommation d'hélium liquide qui est nécessaire pour maintenir la bobine supraconductrice à la température de supraconductivité de 4°K. Dans les dispositifs d'extraction de la technique antérieure utilisant le champ magnétique produit par des bobines supraconductrices, on fait passer le liquide à traiter au travers d'une chambre de traitement disposée au centre de la bobine supraconductrice, de façon à piéger les flocs paramagnétiques et, lorsque la capacité de rétention en flocs magnétiques de la chambre est atteinte, on interrompt le champ magnétique ainsi que l'écoulement, on récupère les flocs, et on rétablit de nouveau le champ magnétique pour recommencer le processus.

L'inconvénient de ce type d'appareil d'extraction fonctionnant en marche cyclique est qu'il nécessite ainsi de couper et de rétablir périodiquement l'intensité du courant électrique (montée et descente en champ magnétique) ce qui provoque une consommation d'énergie importante et, cette coupure et ce rétablissement fréquent de l'intensité provoquant un échauffement au niveau des alimentations de la bobine supraconductrice, on accroît du même coup la quantité d'hélium liquide consommée. En conséquence, les arrêts successifs imposés aux dispositifs de la technique antérieure se traduisent par des surconsommations d'énergie électrique et d'hélium liquide.

La présente invention a pour but de proposer un procédé et un dispositif d'extraction du type précité qui permet de réduire de façon notable à la fois la consommation d'hélium liquide et la consommation d'énergie électrique.

La présente invention a ainsi pour objet un procédé destiné à l'extraction d'éléments sous forme de "flocs" paramagnétiques, précipités ou coprécipités, contenus dans des effluents liquides qui traversent au moins une chambre de traitement soumise à l'action d'un champ magnétique de forte intensité, sous l'action de moyens d'aimantation, notamment à bobine supraconductrice, de façon à piéger les flocs dans la chambre de traitement, caractérisé en ce qu'il comporte une étape de traitement au cours de laquelle les effluents liquides traversent une matrice d'extraction disposée dans la chambre de traitement, qui est destinée à piéger les flocs, une étape de rinçage, au cours de laquelle on interrompt l'admission des effluents dans la chambre de traitement et où l'on admet dans celle-ci une solution de rinçage, de composition appropriée à la dissolution des flocs, et une étape d'évacuation dans laquelle on extrait de ladite chambre de traitement le "liquide de pollution", à savoir celui constitué par les flocs dissous et le liquide de rinçage, ledit champ magnétique étant maintenu pendant la mise en oeuvre de ces trois étapes.

La présente invention offre l'avantage de fonctionner en régime cryomagnétique permanent tout en maintenant les cycles d'alimentation et d'expulsion des produits magnétiques du séparateur, ce qui permet de réaliser un traitement pseudo-continu des effluents, qui ne nécessite pas, pour réaliser la récupération des flocs, d'interrompre le champ magnétique. On réalise ainsi des économies substantielles au niveau de la consommation en hélium liquide et de la consommation en courant électrique, puisqu'il n'est plus nécessaire de couper et de rétablir le courant de façon périodique dans le bobinage supraconducteur.

Dans un mode de mise en oeuvre intéressant du procédé suivant l'invention, et notamment lorsque les flocs sont dissous par une solution acide, on récupère le liquide de pollution dans un récipient de stockage et on utilise celui-ci, en tant que liquide de rinçage, pendant une série de cycles donnés, ce qui permet, au fur et à mesure des différentes étapes de rinçage, d'augmenter la concentration en éléments métalliques du liquide de pollution. La présente invention permet donc ainsi de diminuer le volume des rejets contenant les éléments métalliques dont on souhaite se débarrasser ou que l'on souhaite recycler.

La présente invention a également pour objet un dispositif destiné à l'extraction d'éléments sous forme de "flocs" paramagnétiques, précipités ou coprécipités, contenus dans des effluents liquides, du type comportant des moyens d'aimantation aptes à appliquer un champ magnétique de forte intensité dans au moins une chambre de traitement, cette chambre de traitement comportant des moyens d'alimentation en effluents à traiter et des moyens d'évacuation des effluents traités, de façon qu'elle puisse être traversée par lesdits effluents, caractérisé en ce qu'il comporte des moyens d'obturation des moyens d'alimentation en effluents à traiter et des moyens d'obturation des moyens d'évacuation des effluents traités, la chambre de traitement comporte une matrice d'extraction, en un matériau à forte susceptibilité magnétique, destinée à assurer le piégeage des flocs, cette chambre étant en communication, par l'intermédiaire d'éléments de commande d'obturation respectifs, d'une part avec des moyens d'alimentation en un liquide de rinçage apte à dissoudre les flocs et, d'autre part, avec des moyens d'évacuation du "liquide de pollution", à savoir celui constitué des flocs dissous et du liquide de rinçage, permettant de libérer la chambre de traitement de celui-ci.

Dans un mode de mise en oeuvre intéressant de l'invention, les moyens d'évacuation du "liquide de pollution" sont en communication avec une chambre de stockage et la chambre de stockage comporte des moyens de communication avec les moyens d'alimentation en liquide de rinçage de la chambre de traitement, de façon à admettre le liquide de pollution dans la chambre de traitement, ce qui permet, comme mentionné précédemment, de l'utiliser en tant que liquide de rinçage.

On décrira ci-après, à titre d'exemple non limitatif, une forme d'exécution de la présente invention, en référence au dessin annexé sur lequel :

La figure 1 est une vue schématique en coupe verticale et longitudinale d'un dispositif d'extraction suivant l'invention.

La figure 2 est une vue schématique en coupe verticale suivant la ligne II-II de la figure 3 d'un mode de mise en oeuvre du dispositif d'extraction suivant l'invention.

La figure 3 est une vue schématique en coupe transversale, suivant la ligne III-III de la figure 2, les matrices d'extraction étant ôtées.

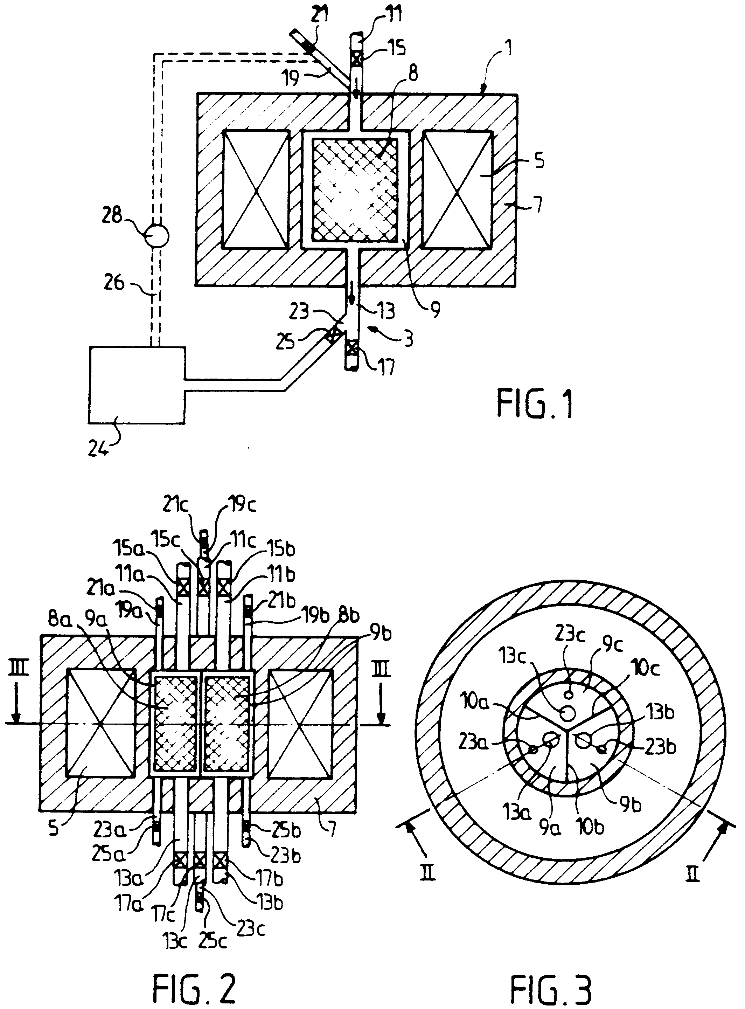

Sur la figure 1 le dispositif suivant l'invention se compose essentiellement d'un élément séparateur cryomagnétique 1 et d'un ensemble automatisé de distribution de solution de lavage et de contrôle électrochimique des flux 3.

L'élément séparateur 1 est constitué d'un bobinage supraconducteur 5, apte à produire un champ magnétique intense avec une très faible consommation d'énergie électrique, et d'une culasse en acier doux 7, destinée à produire un gradient élevé de champ magnétique. Le centre du bobinage 5 forme une chambre de traitement 9, à l'intérieur de laquelle est disposée une matrice d'extraction 8, constituée d'un métal de structure fortement divisée et de forte susceptibilité magnétique.

La chambre de traitement 9 est en communication avec une canalisation d'alimentation en liquide à traiter 11 et une canalisation d'évacuation du liquide traité 13. L'arrivée et la sortie du liquide à traiter et du liquide traité sont respectivement contrôlées par des électrovannes 15 et 17 disposées sur les canalisations 11 et 13.

La chambre de traitement 9 est également en communication avec une canalisation d'alimentation en liquide de rinçage 19 contrôlée par une électrovanne 21, et une canalisation d'évacuation 23, du liquide provenant de la dissolution des flocs, ou "liquide de pollution", qui est elle-même en communication avec une chambre de stockage 24, par l'intermédiaire d'une électrovanne 25.

Le dispositif suivant l'invention comporte également des moyens de commande, non représentés sur le dessin, qui assurent la synchronisation des commandes des différentes électrovannes. Ces moyens de commande peuvent être constitués de tous moyens électriques, pneumatiques, électroniques ou mécaniques permettant de réaliser un cycle de traitement du type de celui décrit ci-après.

Suivant le procédé de traitement conforme à l'invention, on commence tout d'abord par refroidir le bobinage supraconducteur 5, notamment au moyen d'hélium liquide, de façon à porter celui-ci à une température de l'ordre de 4°K. De façon connue, lorsque cette température est atteinte, on alimente en courant électrique le bobinage 5, jusqu'à l'obtention du champ magnétique désiré, puis on coupe cette alimentation et on met en court-circuit les bornes du bobinage supraconducteur 5, tout en maintenant la température de celui-ci à la valeur constante précitée. Dans ces conditions le champ magnétique produit dans la chambre de traitement 9 par le bobinage supraconducteur 5 s'auto-entretient.

Pour réaliser l'étape de traitement, les électrovannes d'alimentation et d'évacuation du liquide de rinçage 21 et 25 étant fermées, on fait circuler à l'intérieur de la chambre de traitement 9 le liquide à traiter, en ouvrant l'électrovanne 15, puis l'électrovanne 17. Dans ces conditions le liquide à traiter, chargé des flocs magnétiques, circule à l'intérieur de la chambre de traitement 9 et les flocs magnétiques se "piègent" par aimantation à l'intérieur de la matrice d'extraction 8, si bien qu'un liquide traité, exempt de flocs, s'écoule par la canalisation d'évacuation de liquide traité 13.

La matrice d'extraction 8 est constituée, par exemple, d'une grille, faite d'un tricot métallique, ou de toute autre configuration appropriée, de façon que le champ magnétique, à l'intérieur de cette matrice d'extraction 8, devienne fortement convergent et que des centres de force se créent, sur lesquels les flocs magnétiques sont piégés.

Au bout d'un temps de traitement donné, qui est fonction de la nature des flocs, du liquide traité, et de l'intensité du champ magnétique, on atteint la capacité de rétention de la matrice d'extraction 8 et l'on doit donc libérer celle-ci des flocs piégés.

On passe ainsi à l'étape de rinçage. Pour ce faire, on interrompt la circulation du liquide au travers de la chambre de traitement 9 en fermant les électrovannes d'alimentation 15 et d'évacuation 17, et on admet le liquide de rinçage dans la chambre de traitement 9 en ouvrant l'électrovanne d'alimentation 21. On laisse agir ensuite le liquide de rinçage sur les flocs, pendant le temps qui lui est nécessaire pour provoquer leur dissolution, puis, après avoir fermé la vanne 21 d'alimentation en liquide de rinçage, on ouvre la vanne d'évacuation 25 et l'on récupère, dans le réservoir de stockage 24, le liquide de pollution contenant les métaux extraits.

Cette récupération terminée on ferme l'électrovanne 25 et l'on rétablit la circulation du liquide à traiter dans la chambre de traitement 9 en ouvrant les électrovannes d'alimentation et d'évacuation 15 et 17, après avoir remis, au moyen d'une solution appropriée, la matrice d'extraction 8 dans des conditions chimiques neutres. Tout au long de ces différentes étapes le champ magnétique est maintenu.

Dans une variante de mise en oeuvre de l'invention, on peut utiliser, en tant que liquide de rinçage, le liquide de pollution, que l'on récupère dans le réservoir 24. Pour ce faire, ainsi que représenté en lignes pointillées sur la figure 1, on relie le réservoir de stockage 24, par une canalisation 26, à la canalisation d'alimentation 19 en liquide de rinçage, avec interposition d'une pompe d'alimentation 28. Un tel mode de mise en oeuvre permet d'utiliser le liquide pollution recueilli dans le réservoir 24 comme liquide de rinçage, de façon, après un certain nombre de cycles de rinçage, à concentrer de façon importante le liquide de pollution, ce qui permet d'en réduire le volume.

On constate ainsi, que suivant le procédé et le dispositif suivant l'invention on réalise l'extraction de matériaux précipités ou coprécipités dans des effluents liquides, sans interrompre le fonctionnement du bobinage supraconducteur 5, ce qui se traduit à la fois par des économies d'énergie, et donc par une réduction des coûts de mise en oeuvre et également par une amélioration de l'efficacité du dispositif.

Dans une variante de mise en oeuvre du dispositif suivant l'invention, représentée sur les figures 2 et 3, on a séparé la chambre de traitement 9 en trois chambres de traitement de volumes identiques 9a,9b,9c, au moyen de cloisons radiales 10a,10b,10c. Chacune des chambres de traitement 9a,9b,9c comporte ses propres canalisations d'alimentation respectives en liquide à traiter 11a,11b,11c et ses propres canalisations d'évacuation du liquide traité 13a,13b,13c. Ces canalisations d'alimentation et d'évacuation sont respectivement pourvues d'électrovannes de commande 15a,15b,15c et 17a,17b,17c.

Chacune des chambres de traitement 9a,9b,9c est également en communication avec une canalisation d'alimentation en liquide de rinçage, respectivement 19a,19b,19c et avec une canalisation d'évacuation du liquide de pollution, respectivement 23a,23b,23c. Les canalisations d'alimentation en liquide de rinçage 19a,19b,19c et les canalisations d'évacuation du liquide de pollution sont respectivement pourvues d'électrovannes de commande 21a,21b,21c et 25a,25b,25c.

Le présent mode de mise en oeuvre de l'invention permet d'améliorer le fonctionnement en continu du dispositif d'extraction. En effet, il permet de réaliser successivement l'étape de rinçage dans l'une des chambres de traitement 9a,9b,9c, alors que dans les deux autres chambres se déroule l'étape de traitement.

Ainsi, si l'on souhaite par exemple réaliser l'étape de rinçage dans la chambre de traitement 9a, alors que les deux autres chambres de traitement, 9b et 9c sont en cours de traitement, on opérera de la façon décrite ci-après.

Dans ce mode de fonctionnement, les électrovannes d'alimentation en liquide à traiter 15b et 15c et les électrovannes d'évacuation du liquide de pollution 17b et 17c des chambres de traitement respectives 9b et 9c sont en position d'ouverture, si bien que le liquide à traiter traverse les chambres de traitement 9b et 9c. L'électrovanne d'alimentation 15a en liquide à traiter et l'électrovanne d'évacuation 17a de liquide de pollution de la chambre 9a sont en position de fermeture, alors que l'électrovanne d'admission de liquide de rinçage 21a est en position d'ouverture et l'électrovanne 25a d'évacuation du liquide de pollution est en position de fermeture, de façon à admettre le liquide de rinçage dans la chambre 9a. On laisse le dispositif dans une telle situation, pendant un temps donné nécessaire à la dissolution complète des flocs par le liquide de rinçage puis, après avoir fermé l'électrovanne d'alimentation en liquide de rinçage 21a, on ouvre l'électrovanne d'évacuation du liquide de pollution 25a, de façon à récupérer celui-ci, de préférence dans un réservoir de stockage (non représenté sur le dessin). Une fois le liquide de pollution récupéré, la vanne 25a est mise en position d'obturation et la chambre 9a peut alors de nouveau être utilisée pour le traitement.

On procéde ainsi de façon successive avec chacune des chambres de traitement du dispositif.

Dans un tel mode de mise en oeuvre, le dispositif d'extraction suivant l'invention fonctionne de façon continue avec au moins deux chambres de traitement.

On pourrait bien entendu choisir le nombre de chambres de traitement de façon telle que, compte tenu du temps nécessaire au rinçage des flocs, il y ait une chambre de traitement qui se trouve constamment en position de lavage.

On peut également prévoir à la place du système statique précédemment décrit, un système rotatif d'alimentation, de lavage et de récupération, qui serait commandé par des moyens automatisés et qui permettrait d'utiliser le volume total de la chambre de traitement 9.

Dans un mode de mise en oeuvre de l'invention, et afin d'améliorer le rinçage de la matrice d'extraction 8, on peut soumettre celle-ci à des vibrations, par exemple générées par des moyens producteurs d'ultrasons.

## Revendications

**1. -** Procédé destiné à l'extraction d'éléments sous forme de "flocs" paramagnétiques, précipités ou coprécipités, contenus dans des effluents liquides qui traversent au moins une chambre de traitement (9,9a,9b,9c) soumise à l'action d'un champ magnétique de forte intensité, sous l'action de moyens d'aimantation (5, 7), notamment à bobine supraconductrice, de façon à piéger les flocs dans la chambre de traitement (9,9a,9b,9c), caractérisé en ce qu'il comporte une étape de traitement au cours de laquelle les effluents à traiter traversent une matrice d'extraction (8,8a,8b,8c) disposée dans la chambre de traitement (9,9a,9b,9c), qui est destinée à piéger les flocs, une étape de rinçage, au cours de laquelle on interrompt l'admission des effluents à traiter dans la chambre de traitement (9,9a,9b,9c) et où l'on admet dans celle-ci une solution de rinçage, de composition appropriée à la dissolution des flocs, et une étape d'évacuation dans laquelle on extrait de ladite chambre de traitement (9,9a,9b,9c) le "liquide de pollution", à savoir celui constitué par les flocs dissous et le liquide de rinçage, ledit champ magnétique étant maintenu pendant la mise en oeuvre de ces trois étapes.

**2.-** Procédé suivant la revendication 1 dans lequel le champ magnétique de forte intensité est produit par une bobine supraconductrice (5), c'est-à-dire une bobine maintenue à basse température voisine de 4°K, susceptible d'être alimentée en courant électrique, caractérisé en ce que, une fois le champ magnétique établi à la valeur souhaitée pour le traitement, on coupe l'alimentation électrique de ladite bobine supraconductrice (5), tout en la maintenant à la susdite température.

**3.-** Procédé suivant l'une des revendications 1 ou 2 caractérisé en ce que l'on récupère le liquide de pollution, dans un récipient de stockage (24) et que l'on utilise ce liquide de pollution, en tant que liquide de rinçage, pendant une série de cycles donnée.

**4.-** Procédé suivant l'une quelconque des revendications précédentes caractérisé en ce que l'on soumet la matrice d'extraction (8,8a,8b,8c) à un mouvement de vibration, lors de l'étape de rinçage.

**5.-** Dispositif destiné à l'extraction d'éléments sous forme de "flocs" paramagnétiques, précipités ou coprécipités, contenus dans des effluents liquides, du type comportant des moyens d'aimantation (5,7) aptes à appliquer un champ magnétique de forte intensité dans au moins une chambre de traitement (9,9a,9b,9c), contenant une matrice d'extraction (8,8a,8b,8c), cette chambre de traitement comportant des moyens d'alimentation (11,11a,11b,11c) en effluents à traiter et des moyens d'évacuation (13,13a,13b,13c) du "liquide de pollution", à savoir celui constitué par les flocs dissous et le liquide de rinçage de façon qu'elle puisse être traversée par lesdits effluents, caractérisé en ce que :
- il comporte des moyens d'obturation (15,15a,15b,15c) des moyens d'alimentation en effluents à traiter et des moyens d'obturation (17,17a,17b,17c) des moyens d'évacuation du liquide de pollution,
- la chambre de traitement (9,9a,9b,9c) comporte une matrice d'extraction (8,8a,8b,8c), en un matériau à forte susceptibilité magnétique, destinée à assurer le piégeage des flocs, cette chambre étant en communication, par l'intermédiaire d'éléments de commande d'obturation respectifs, (21,21a,21b,21c;25,25a,25b,25c) d'une part avec des moyens d'alimentation (19,19a,19b,19c) en un liquide de rinçage apte à dissoudre les flocs et, d'autre part, avec des moyens d'évacuation (23,23a,23b,23c) du liquide de pollution permettant de libérer la chambre de traitement (9,9a,9b,9c) de celui-ci.

**6.-** Dispositif suivant la revendication 5 caractérisé en ce que les moyens d'évacuation (23,23a,23b,23c) du liquide de pollution sont en communication avec une chambre de stockage (24).

**7.-** Dispositif suivant la revendication 6 caractérisé en ce que la chambre de stockage (24) comporte des moyens de communication avec les moyens d'alimentation (19,19a,19b,19c) en liquide de rinçage de la chambre de traitement (9,9a,9b,9c), de façon à admettre le liquide de pollution, en tant que liquide de rinçage, dans ladite chambre de traitement (9,9a,9b,9c).

**8.-** Dispositif suivant l'une des revendications 5 à 7 caractérisé en ce que la chambre de traitement est divisée en au moins deux chambres élémentaires (9a,9b,9c) ces chambres étant successivement utilisées comme chambre de traitement, et comme chambre de rinçage.

**9.-** Dispositif suivant l'une des revendications 5 à 7 caractérisé en ce qu'il comporte au moins deux chambres de traitement susceptibles de prendre place successivement, notamment sous l'action de moyens automatisés de commande, à l'intérieur de la bobine supra-conductrice (5,7), de façon que l'une de ces chambres soit utilisée comme chambre de traitement, alors que ladite autre chambre soit utilisée comme chambre de rinçage.

**10.-** Dispositif suivant l'une des revendications 5 à 9 caractérisé en ce qu'il comporte des moyens aptes à animer d'un mouvement de vibration la matrice d'extraction (8,8a,8b,8c).

**11.-** Dispositif suivant la revendication 5 à 10 caractérisé en ce que la matrice d'extraction (8,8a,8b,8c) possède une structure finement divisée.
